(19) **Europäisches Patentamt**
**European Patent Office**
**Office européen des brevets**

(11) **EP 3 274 658 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **16711319.0**

(22) Anmeldetag: **23.03.2016**

(51) Int Cl.:
***G01C 19/72*** *(2006.01)*

(86) Internationale Anmeldenummer:
**PCT/EP2016/056457**

(87) Internationale Veröffentlichungsnummer:
**WO 2016/156167 (06.10.2016 Gazette 2016/40)**

(54) **MITTELWERTFREI GESTEUERTER PHASENMODULATOR FÜR FASEROPTISCHE KREISEL UND FASEROPTISCHER KREISEL**

PHASE MODULATOR CONTROLLED WITHOUT AN AVERAGE VALUE FOR FIBER OPTIC GYROSCOPES AND FIBER OPTIC GYROSCOPE

MODULATEUR DE PHASE COMMANDÉ À VALEUR MOYENNE NULLE POUR GYROSCOPES À FIBRE OPTIQUE ET GYROSCOPE À FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2015 DE 102015004039**

(43) Veröffentlichungstag der Anmeldung:
**31.01.2018 Patentblatt 2018/05**

(73) Patentinhaber: **Northrop Grumman LITEF GmbH 79115 Freiburg (DE)**

(72) Erfinder:
• **SPAHLINGER, Günter 70188 Stuttgart (DE)**
• **DEPPE-REIBOLD, Olaf Emmendingen 79312 (DE)**

(74) Vertreter: **Müller Hoffmann & Partner Patentanwälte mbB St.-Martin-Strasse 58 81541 München (DE)**

(56) Entgegenhaltungen:
**EP-A1- 0 441 998      DE-C1- 19 748 909 US-A1- 2004 165 190**

**EP 3 274 658 B1**

**Beschreibung**

Die Erfindung betrifft ein Steuersystem für einen faseroptischen Kreisel, sowie einen faseroptischen Kreisel, insbesondere ein faseroptisches Sagnac-Interferometer.

Die Erfindung betrifft zudem auch ein Steuersystem für einen auf dem Faraday-Effekt basierenden faseroptischen Stromsensor, sowie einen derartigen faseroptischen Stromsensor.

Faseroptische Kreisel, wie z.B. Sagnac-Interferometer, werden in Drehratensensoren in Inertialnavigationssystemen eingesetzt.

Inertiale Navigationssysteme sind auf vielfältige Weise realisierbar, wobei in der Regel ein Erfassen von auf ein Objekt wirkenden Kräften bzw. Beschleunigungen und die anliegenden Drehraten einer Positionsbestimmung zugrunde liegen. Anstelle von mechanischen Effekten können auch optische Effekte zur Bestimmung der Drehraten für Inertiale Navigationssysteme ausgenutzt werden. Ein derartiges Inertiales Navigationssystem kann auf wenigstens einem faseroptischen Kreisel, wie etwa einem Sagnac-Interferometer basieren. Dieses nutzt den Sagnac-Effekt aus, gemäß dem bei einer Rotation einer optischen Lichtleiterschleife um ihre Normale ein optischer Wegunterschied zwischen zwei in der Lichtleiterschleife entgegengesetzt laufenden Lichtstrahlen auftritt. Bei der Beobachtung des aus der Lichtleiterschleife austretenden und überlagerten Lichts der beiden Lichtstrahlen wird während der Rotation eine Intensitätsänderung sichtbar, die durch eine Interferometerkennlinie beschrieben werden kann, die die Intensitätsänderung in Abhängigkeit der Phasendifferenz der beiden Lichtwellen beschreibt. Anders ausgedrückt ruft eine auf einen faseroptischen Kreisel, wie etwa ein Sagnac-Interferometer, einwirkende Drehbewegung eine Phasenverschiebung zwischen den beiden entgegengesetzt umlaufenden Lichtstrahlen hervor, so dass am Ort der Überlagerung beider Strahlen eine von der Drehbewegung abhängige Intensitätsänderung beobachtet werden kann.

Die Phasenverschiebung in einem faseroptischen Sagnac-Interferometer ist direkt proportional zu der Drehgeschwindigkeit, der Weglänge des Lichtwegs in der Lichtleiterschleife bzw. einer Lichtleiterspule und dem Durchmesser des kreisförmigen Lichtwegs. Die Phasenverschiebung verhält sich außerdem umgekehrt proportional zur Wellenlänge des eingesetzten Lichts.

Die oben bereits erwähnte Interferometerkennlinie, die die Abhängigkeit der Lichtintensität, die als Beobachtungsgröße zur Bestimmung der Rotation dienen soll, von der Phasendifferenz beschreibt, ist kosinusförmig.

Da eine entsprechende Transferfunktion im Maximum der Kosinus-Kurve unempfindlich gegenüber kleinen Eingangswerten ist und ein der Drehrichtung entsprechendes Vorzeichen der Phasenverschiebung nicht ermittelbar ist, wird durch Phasenmodulation häufig ein Arbeitspunkt des faseroptischen Kreisels derart eingestellt, dass er im Punkt einer maximalen Steigung der KosinusFunktion liegt. Hierzu kommen beispielsweise Sinus- oder Rechteckmodulationen infrage. Somit soll bereits bei einer geringen Drehbewegung eine maximale Empfindlichkeit des Interferometers gewährleistet sein.

Ein Drehratensensor, der einen faseroptischen Kreisel enthält, weist meist einen Integrierten Optischen Multifunktions-Chip (multifunctional integrated optical chip, MIOC) als Phasenmodulator auf, mithilfe dessen eine Phasenmodulation von durchlaufenden Lichtstrahlen durchführbar ist. Der MIOC ist in der Regel Teil eines Regelkreises zum Einstellen der oben beschriebenen Phasenmodulation mittels eines Steuersignals. Physikalische Effekte im MIOC, z. B. bewegliche Ladungsträger, verursachen eine Abhängigkeit der Phasenmodulation von der Frequenz des Steuersignals. Der MIOC weist also einen Frequenzgang auf, aufgrund dessen auf unterschiedliche Frequenzen unterschiedliche Frequenzantworten erfolgen, insbesondere ist ein Antwortverhalten des MIOC bei kleinen Frequenzen weniger stark ausgeprägt als bei großen Frequenzen. Da dieses Phänomen auch auf die Beweglichkeit der Ladungsträger im MIOC zurückgeht, liegt auch eine Abhängigkeit des MIOC-Frequenzgangs von der Umgebungstemperatur bzw. der Temperatur des MIOC selbst vor. DE 197 48 909, EP 0441998, US 2004/165190 offenbaren Drehratensensoren mit faseroptischen Kreisel mit statistischer Phasenmodulation der Steuersignale.

Dieser MIOC-Frequenzgang führt zu einer speziellen Form des Lock-in Effekts, der sich darin äußert, dass bei tatsächlichen geringen Drehraten um 0°/h eine Häufung von Ausgangssignalen auftritt, die einer Drehrate von 0°/h entsprechen. Die daraus hervorgehende Unempfindlichkeit eines faseroptischen Kreisels, wie etwa eines Sagnac-Interferometers, gegenüber sehr geringen Drehraten behindert eine hochpräzise und zuverlässige Messung insbesondere bei sehr geringen Drehraten.

Der Erfindung liegt die Aufgabe zugrunde, ein Steuersystem für einen faseroptischen Kreisel anzugeben, bei dem der durch den Frequenzgang des Phasenmodulators verursachte Lock-In-Effekt wirksam eingedämmt wird und bei dem selbst bei kleinen Drehraten hochpräzise Drehratenmessungen durchführbar sind. Diese Aufgabe wird erfindungsgemäß durch den Gegenstand der unabhängigen Patentansprüche gelöst. Weiterbildungen sind in den jeweiligen Unteransprüchen angegeben.

Ein Steuersystem für einen faseroptischen Kreisel weist einen Phasenmodulator zum Modulieren einer Phase eines Lichtsignals und eine Steuereinheit zum Erzeugen eines Steuersignals auf, um dessen Größe die Phase moduliert wird und das dem Phasenmodulator zugeführt wird. Dabei ändert sich das Steuersignal statistisch und ist mittelwertfrei.

Es hat sich gezeigt, dass sich durch die Verwendung eines Steuersignals für die Phasenmodulation in einem faseroptischen Kreisel, dessen Signalwerte einer statistischen Verteilung unterliegen und dessen Erwartungswert gleich null ist, der niederfrequente Anteil im Steuersignal reduzieren lässt. Steuersignale für kleine Drehraten weisen damit ein ähnliches Frequenzspektrum auf wie Steuersignale für große Drehraten. Deshalb ist auch für kleine Drehraten gewährleistet, dass dem Phasenmodulator keine Steuersignale kleiner Frequenz zur Steuerung der Phasenmodulation zugeführt werden. Damit gleicht sich das Antwortverhalten des Phasenmodulators bei kleinen Drehraten dem Antwortverhalten des Phasenmodulators bei großen Drehraten an, wodurch der Lock-In-Effekt reduziert wird und ein Bevorzugen des Messwerts "0°/h" bei kleinen Drehraten verschwindet.

Die Steuereinheit kann das statistische, mittelwertfreie Steuersignal aus einem deterministischen Primärsignal erzeugen. Dadurch wird gewährleistet, dass das statistische Steuersignal aus einem deterministisch bestimmten Primärsignal abgeleitet wird. Dies erlaubt es, den Phasenmodulator auf bestimmte Gruppen von Modulationswerten einzustellen, obwohl ein statistisch fluktuierendes Signal zur direkten Ansteuerung benutzt wird.

Das Phasenmodulationssignal kann zum Beispiel benutzt werden, um zu bestimmen, bei welcher Phase oder Phasendifferenz die Intensität des im faseroptischen Kreisel bestimmten Interferenzsignals gemessen werden soll, d.h. die Phasenmodulation bestimmt den Arbeitspunkt der Intensitätsmessung an der Interferometerkennlinie. Das Primärsignal kann dann z.B. benutzt werden, um einen Arbeitspunkt festzulegen. Das Primärsignal wird derart in das statistische, mittelwertfreie Steuersignal umgewandelt, dass anstatt des durch das Primärsignal bestimmten Arbeitspunkts andere Arbeitspunkte ausgewählt werden, die äquivalente Messergebnisse liefern. Somit wird sichergestellt, dass trotz des zur Reduzierung des Lock-In-Effekts benutzten statistischen Steuersignals Messbedingungen für die Intensitätsmessung bestimmt werden können.

Hierfür weist die Steuereinheit einen Zufallszahlengenerator auf, der Zufallszahlen r zwischen 0 und q mit einer Wahrscheinlichkeit von 1/q erzeugt. Für ein von der Steuereinheit erzeugtes Primärsignal der Größe x weist das Steuersignal die Größe $(x-x_r)$ auf. wobei gilt, dass $x_r = 0$ für $x+r < q$ und $x_r = q$ für $x+r \geq q$. Dadurch wird gewährleistet, dass das Steuersignal und damit die durch das Steuersignal erzeugte Phasenverschiebung statistisch verteilt und mittelwertfrei sind, da der Signalanteil $x_r$ den Mittelwert x, d.h. den Wert des Primärsignals hat. Das Primärsignal wird also (für festes q) in Abhängigkeit von der Größe der Zahl x und der Größe der Zahl r um den Wert q korrigiert, wobei dies durch den Zufallscharakter der Zahl r auf statistische Weise geschieht. Dadurch wird es ermöglicht, die Messbedingungen durch die geeignete Wahl eines Parameters q derart zu bestimmen, dass trotz des statistischen Steuersignals eine bestimmte Gruppe von Arbeitspunkten ausgewählt wird, an denen sich äquivalente Messungen durchführen lassen.

Die Größen r und q können dabei beliebige Zahlen sein, soweit sie sich von einem gewöhnlichen Computersystem verarbeiten lassen können. Zum Beispiel können die Größen r und q bis auf eine bestimmte Kommastelle gerundete reelle Zahlen sein. Auch die Wortbreite der Größen r und q in Bits kann dabei beliebig sein.

Der Wert von q kann dabei $\pi$ betragen. Dadurch fluktuiert der Wert des Steuersignals statistisch zwischen dem Wert des Primärsignals x und dem um $\pi$ verschobenen Wert $(x-\pi)$. Ein Arbeitspunkt springt also in Abhängigkeit von der Größe des Wertes x statistisch um eine halbe Periode einer kosinus- oder sinusförmigen Funktion, deren Phase vom Phasenmodulator moduliert wird. Durch die Mittelwertfreiheit wird gewährleistet, dass dem Phasenmodulator keine Steuersignale mit niedrigem Frequenzanteil zugeführt werden, wodurch die Drehratenbestimmung von kleinen Drehraten in einem faseroptischen Kreisel verbessert werden kann. Für einen Wert von q gleich $\pi$ ist zudem gewährleistet, dass Arbeitspunkte mit positiver und negativer Steigung statistisch verteilt ausgewählt werden.

Der Wert von q kann aber auch $2\pi$ betragen. Dadurch fluktuiert der Wert des Steuersignals statistisch zwischen dem Wert des Primärsignals x und dem um $2\pi$ verschobenen Wert $(x-2\pi)$. Ein Arbeitspunkt springt also in Abhängigkeit von der Größe des Wertes x statistisch um eine vollständige Periode einer kosinus- oder sinusförmigen Funktion, deren Phase vom Phasenmodulator moduliert wird. Durch die Mittelwertfreiheit wird gewährleistet, dass dem Phasenmodulator keine Steuersignale mit niedrigem Frequenzanteil zugeführt werden, wodurch die Drehratenbestimmung von kleinen Drehraten in einem faseroptischen Kreisel verbessert werden kann. Für einen Wert von q gleich $2\pi$ ist zudem gewährleistet, dass Arbeitspunkte mit gleicher Steigung statistisch verteilt ausgewählt werden.

Das Primärsignal kann dabei eine Überlagerung eines Rechtecksignals und eines Rampensignals sein. Dadurch ist gewährleistet, dass durch die Sprünge zwischen verschiedenen Werten des Rechtecksignals große Phasenverschiebungen durch den Phasenmodulator erzeugt werden, die z.B. zum Verschieben von Arbeitspunkten genutzt werden könnten. Das Rampensignal ist dem Rechtecksignal überlagert und garantiert eine gleichbleibende Phasenverschiebung und damit das Halten eines Arbeitspunkts.

Das Steuersignal kann eine Wortbreite aufweisen, die um 1 Bit breiter ist als die Wortbreite des Primärsignals. Dadurch kann das statistische, mittelwertfreie Steuersignal auf einfache Weise durch Hinzufügen eines Bits, das die Zufallsinformation enthält, aus dem Primärsignal erzeugt werden. Dies erlaubt eine möglichst einfache Datenübertragungs- und Datenstruktur.

Der Phasenmodulator kann einen Integrierten Optischen Multifunktions-Chip (multifunctional integrated optical chip, MIOC) aufweisen, der das Steuersignal empfängt. In einem solchen, bekannten MIOC wird die Phase von durchlaufendem Licht mithilfe von Elektroden moduliert. Dabei kann durch ein mit Hilfe der Elektroden appliziertes elektrisches Feld der effektive Index bzw. die Fähigkeit zum Leiten von Licht beeinflusst werden. Dadurch wird es ermöglicht, die Phase von durchlaufendem Licht auf besonders einfache Weise zu modulieren.

Ein faseroptischer Kreisel kann das oben beschriebene Steuersystem aufweisen. Zudem kann der faseroptische Kreisel eine Lichtquelle zum Emittieren von Licht mit einer bestimmten Wellenlänge und einen Strahlteiler zum Teilen des Lichts aus der Lichtquelle in zwei einlaufende Strahlen, die in den Phasenmodulator geleitet werden, und zum Überlagern von zwei aus dem Phasenmodulator austretenden auslaufenden Strahlen zu einem Detektionsstrahl aufweisen. Des Weiteren kann der faseroptische Kreisel eine Spule zum gegenläufigen Umlaufen der in dem Phasenmodulator empfangenen einlaufenden Strahlen, bevor sie als zwei auslaufende Strahlen dem Phasenmodulator wieder zugeführt werden, und einen Detektor zum Messen einer Intensität des Detektionsstrahls aufweisen, die an die Steuereinheit weitergeben wird. Dabei bestimmt die Steuereinheit aus der gemessenen Intensität eine Drehrate um eine Zentralachse der Spule und das statistische, mittelwertfreie Steuersignal.

In dem faseroptischen Kreisel erzeugt also eine Lichtquelle einen Lichtstrahl, d.h. ein Lichtsignal, mit einer bestimmten Wellenlänge, z.B. einen Laserstrahl mit vorgegebener Wellenlänge. Dieser wird in einen Lichtleiter eingekoppelt und einem Strahlteiler zugeführt, der ihn in zwei Strahlen teilt, die in den Phasenmodulator einlaufen. Dabei kann es sich wie oben erläutert um einen MIOC handeln. Der Strahlteiler kann dabei auch direkt in dem MIOC integriert sein, z.B. derart, dass der MIOC einen Y-förmigen Lichtweg aufweist, d.h. zwei Ein-/Ausgänge auf der einen Seite und einen Aus-/Eingang auf der anderen Seite.

Im Phasenmodulator wird die Phase der beiden Strahlen relativ zueinander um einen durch das Steuersignal bestimmten Wert verschoben, bevor die Strahlen in die Spule eingekoppelt werden. Die Spule ist dabei derart ausgebildet, dass sie aus mindestens einem in einer Ebene aufgewickelten Lichtleiter besteht. In diesen Lichtleiter werden die Strahlen derart eingekoppelt, dass die beiden Strahlen gegenläufig in der Spule umlaufen, d.h. läuft ein Strahl z.B. gegen den Uhrzeigersinn, läuft der andere im Uhrzeigersinn.

Wird die Spule während des Durchlaufens der Strahlen um eine senkrecht auf die Ebene der Wicklungen stehende Zentralachse rotiert, so ändert sich der effektive Laufweg der Lichtstrahlen bis zum Austritt. Der Laufweg von gegen die Rotationsrichtung laufenden Strahlen wird verkürzt, während der Laufweg von mit der Rotationsrichtung laufenden Strahlen verlängert wird. Lichtstrahlen, die beim Eintritt in die Spule gleiche Phase hatten, haben beim Austritt aus der Spule eine gegenseitige Phasendifferenz, die proportional zur Drehrate ist (Sagnac-Effekt). Diese Phasendifferenz lässt sich bei Überlagerung der Lichtstrahlen aus dem entstehenden Interferenzmuster ableiten. Im vorliegenden Fall verändert sich die durch den Phasenmodulator erzeugte Phasendifferenz der einlaufenden Strahlen also noch zusätzlich um die aus dem Sagnac-Effekt resultierende Phasendifferenz

Um ein auslesbares Interferenzmuster zu erzeugen, werden die auslaufenden Strahlen zurück in den Phasenmodulator und den Strahlteiler gekoppelt, der die Strahlen überlagert. Im Phasenmodulator wird den Strahlen zudem eine weitere Phasenverschiebung in Abhängigkeit des Steuersignals aufmoduliert. Aufgrund der Reziprozität des Aufbaus, würde bei gleich bleibendem Steuersignal die Phasenverschiebung zwischen den entgegengesetzt umlaufenden Strahlen nach einer Umlaufzeit wieder verschwinden.

Die Phasenmodulation wird generiert, um für die Ausmessung des Interferenzsignals bestimmte Arbeitspunkte auszuwählen. Um ein bestmögliches Bestimmen der Drehrate zu ermöglichen, werden die Arbeitspunkte z.B. derart ausgewählt, dass sie Punkte maximaler Steigung der Interferometerkennlinie sind und Punkte positiver und negativer Steigung abwechselnd ausgewählt werden. Um Autokorrelationen in der Ausleseschaltung des faseroptischen Kreisels zu vermeiden, darf der Wechsel zwischen den Arbeitspunkten nicht periodisch erfolgen, wobei es vier Arbeitspunkte gibt.

Da sich bei gleich bleibendem Steuersignal die Phasenverschiebungen beim Ein- und Auslaufen der Lichtstrahlen in bzw. aus der Spule aufheben, kann das Steuersignal zeitlich derart verändert werden, dass sich gerade die erwünschten Arbeitspunkte ergeben.

Das entsprechend modulierte, aus den überlagerten Strahlen bestehende Interferenzsignal wird wiederum über Lichtleiter in den Detektor eingekoppelt, wo dessen Intensität an den durch die Phasenmodulation bestimmten Arbeitspunkten gemessen wird. Aus diesen Intensitätsmessungen werden dann in der Steuereinheit die anliegende Drehrate und das zur Steuerung der Phasenmodulation notwendige Steuersignal bestimmt. Phasenmodulator, Detektor und Steuereinheit bilden also einen geschlossenen Regelkreis.

Durch die oben beschriebene Anordnung ist es also möglich, einen faseroptischen Kreisel bereitzustellen, der aufgrund der Steuerung durch ein statistisches, mittelwertfreies Steuersignal keinen Lock-In-Effekt bei Drehraten nahe Null aufweist, der durch den Frequenzgang eines Phasenmodulators verursacht wird.

Der faseroptische Kreisel kann dabei wie oben erläutert mittels des Phasenmodulationssignals die Phasen der zwei einlaufenden Strahlen und die Phasen der zwei auslaufenden Strahlen derart modulieren, dass die Intensität des Detektionsstrahls an vorbestimmten Arbeitspunkten messbar ist. Dadurch ist gewährleistet, dass optimale Messbedingungen vorliegen, wodurch die Präzision des faseroptischen Kreisels erhöht wird.

Die Arbeitspunkte können dabei aufeinanderfolgende Punkte maximaler Steigung der gegen Phase aufgetragenen Intensität des Detektionsstrahls sein und es können 4 oder 8 Arbeitspunkte benutzt werden. Wie oben bereits erläutert, wird durch die Auswahl von wenigstens vier Arbeitspunkten (Auslesebereich von $2\pi$) die Gefahr von Autokorrelationen in der Auswertschaltung des faseroptischen Kreisels reduziert. Die Wahl von 8 Arbeitspunkten, d.h. eines Auslesebereichs von $4\pi$ führt zu einer größeren Freiheit bei der Festlegung von Parametern im Regelkreis des faseroptischen Kreisels. Dadurch ist es möglich, sämtliche Bedingungen an die Arbeitspunkte für einen hochpräzisen Betrieb des faseroptischen Kreisels auch bei kleinen Drehraten zu erfüllen.

Der faseroptische Kreisel kann ein faseroptisches Sagnac-Interferometer sein. Dadurch werden die oben erläuterten Vorteil auch für Messungen mit einem faseroptischen Sagnac-Interferometer zugänglich.

Diese und weitere Vorteile der Erfindung werden nachfolgend anhand von Beispielen unter Zuhilfenahme der begleitenden Figuren erläutert. Es zeigt:

Fig. 1A        ein schematisches Blockschaltbild eines Steuersystems gemäß einer Ausführungsform;

Fig. 1B        ein schematische Blockschaltbild eines Steuersystems gemäß einer weiteren Ausführungsform;

Fig. 2        ein schematisches Blockschaltbild der Datenübertragung in einem Steuersystem gemäß einer Ausführungsform;

Fig. 3        ein schematisches Blockschaltbild eines faseroptischen Kreisels gemäß einer Ausführungsform;

Fig. 4        ein schematisches Blockschaltbild einer digitalen Auswerteschaltung gemäß dem Stand der Technik;

Fig. 5        ein schematisches Blockschaltbild der Datenübertragung in einem Steuersystems gemäß einer Ausführungsform;

Fig. 6        ein schematisches Blockschaltbild der Datenübertragung in einem Steuersystem gemäß einer weiteren Ausführungsform; und

Fig. 7A bis 7C        Ergebnisse von Drehratenmessungen unter Verwendung eines Steuersystems aus dem Stand der Technik und von Steuersystemen gemäß den Ausführungsformen von Fig. 5 und 6.

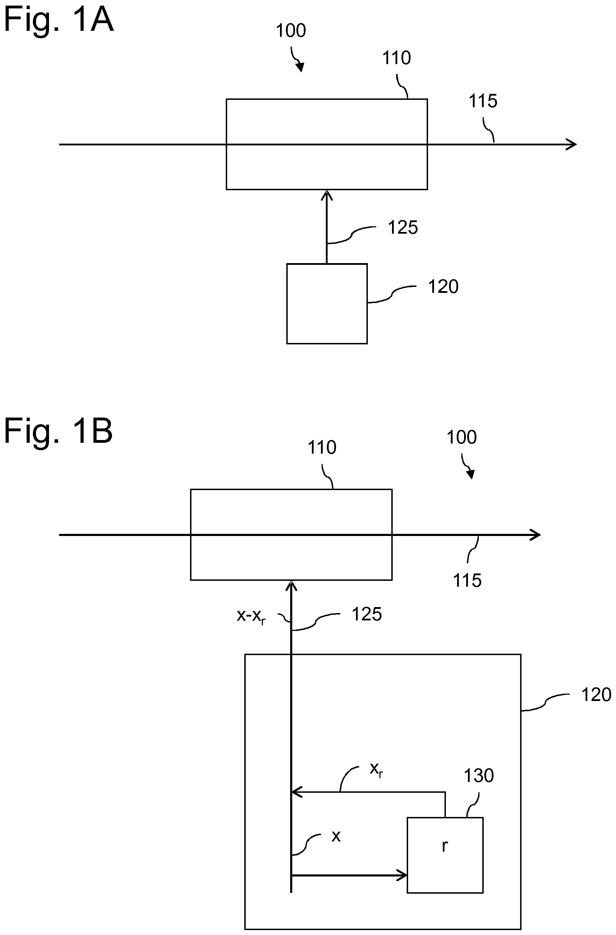

Fig. 1A zeigt ein Steuersystem 100, das zur Steuerung eines faseroptischen Kreisels geeignet ist. Das Steuersystem 100 weist einen Phasenmodulator 110 und eine Steuereinheit 120 auf.

Der Phasenmodulator 110 ist dazu geeignet, die Phase eines Signals 115, das ihn durchläuft zu verändern. Mit dem Phasenmodulator 110 ist es zum Beispiel möglich, die Phase eines durchlaufenden Lichtstrahls um einen bestimmten Betrag zu verschieben. Der Phasenmodulator 110 kann zum Beispiel einen Integrierten Optischen Multifunktions-Chip (MIOC) aufweisen. In dem MIOC wird die Phase von durchlaufendem Licht mithilfe von Elektroden moduliert. Dabei kann durch ein mit Hilfe der Elektroden appliziertes elektrisches Feld der effektive Index bzw. die Fähigkeit zum Leiten von Licht beeinflusst werden. Dadurch wird es ermöglicht, die Phase von durchlaufendem Licht auf besonders einfache Weise zu modulieren bzw. zu verschieben.

Von der Steuereinheit 120 wird dem Phasenmodulator 110 ein Steuersignal 125 zugeführt, mit dem die Phasenmodulation gesteuert wird. Die Steuereinheit 120 kann neben der Bereitstellung des Steuersignals 125 noch weitere Aufgaben übernehmen. Zum Beispiel kann die Steuereinheit 120 ein Computerprozessor, etwa eine CPU, sein, der sämtliche oder einen Teil der Prozesse in einem System oder einer Vorrichtung, wie etwa einem faseroptischen Kreisel, in dem das Steuersystem 100 zum Einsatz kommt, kontrolliert.

Die Stärke der Phasenmodulation wird durch die Größe des Steuersignals 125 bestimmt. Zum Beispiel kann im MIOC das Steuersignal die an die Elektroden anzulegende Spannung sein und die Phasenverschiebung zum Spannungswert direkt proportional sein. Die Proportionalitätskonstante bildet der elektrooptische Verstärkungsfaktor der verwendeten Modulationsstruktur. Dieser kann für die verwendeten Modulationsstrukturen bestimmt werden. Skaliert man das Steuersignal 125 mit dem Inversen des elektrooptischen Verstärkungsfaktors, ist die Größe des resultierenden Steuersignals 125 also gleich der Phasenverschiebung, d.h. der Wert des Steuersignals 125 gibt direkt die Phasenverschiebung an. Die Kompensation des elektrooptischen Verstärkungsfaktors kann zum Beispiel bei einer in der Steuereinheit 120 durchgeführten digital-analog (DA) Wandlung erfolgen.

Das Steuersignal 125, das zur Steuerung der Phasenmodulation verwendet wird, ist ein statistisches Signal. Das bedeutet, dass, im Gegensatz zu deterministischen Signalen, sein Wert nicht eindeutig festgelegt ist, sondern einer bestimmten Wahrscheinlichkeitsverteilung folgt. In jedem Rechenzyklus der Steuereinheit 120 bestimmt sich also der Wert des Steuersignals 125 aus einer Menge von Werten, denen jeweils eine Wahrscheinlichkeit für ihr Auftreten zugeordnet ist. Das Steuersignal weist also eine statistische, d.h. vorher nicht festlegbare, Fluktuation auf.

Die Statistik des Steuersignals 125 ist dabei dadurch charakterisiert, dass der Mittelwert des Steuersignals 125 gleich null ist. Das Steuersignal 125 ist also mittelwertfrei. Aus diesen Eigenschaften des Steuersignals 125 ergibt sich, dass in dem Frequenzspektrum des Steuersignals 125 Frequenzen nahe null stark unterdrückt sind. Dadurch wird es möglich, mit dem Steuersignal 125 Phasenmodulatoren, wie etwa MIOCs, zu betreiben, deren Antwortverhalten bei kleinen Frequenzen sich von ihrem Antwortverhalten bei großen Frequenzen unterscheidet. Zum Beispiel kann eine geringere elektrooptische Verstärkung im MIOC bei kleinen Frequenzen dadurch unmerklich gemacht werden, dass das statistische, mittelwertfreie Steuersignal 125 verwendet wird, das keine oder nur stark unterdrückte Frequenzkomponenten im vom MIOC schwächer verstärkten Frequenzbereich aufweist. Dies erlaubt es, einen Phasenmodulator mit einem bei kleinen und großen Frequenzen unterschiedlichen Antwortverhalten stabil und verlässlich zu betreiben.

Das Steuersignal 125 kann dabei aus einem Primärsignal erzeugt werden, das selbst deterministisch ist. Das Primärsignal nimmt also einen ihm von der Steuereinheit 120 zugewiesenen Wert an, basierend auf dem dann das Steuersignal 125 erzeugt wird. Dadurch wird zusätzlich zur Mittelwertfreiheit des Steuersignals 125 eine weitere Eigenschaft des Steuersignals 125 festgelegt, nämlich das Basieren auf dem Primärsignal. Dies ermöglicht es, den Phasenmodulator 110 effektiv zu steuern, indem als ursprüngliches Signal, das die Phasenmodulation auf einen bestimmten Wert einstellen soll, das Primärsignal verwendet wird, das dann derart verändert wird, dass ein statistisches, mittelwertfreies Steuersignal 125 resultiert.

Das Primärsignal kann zum Beispiel eine Überlagerung aus einem Rechtecksignal mit mindestens vier temporär festen Signalwerten und einem Rampensignal sein. Dabei werden die temporär festen Signalwerte des Rechtecksignals verwendet, um in dem Phasenmodulator 110 durch Springen zwischen verschiedenen Signalwerten eine plötzliche, diskontinuierliche Phasenverschiebung zu erzeugen. Das Rampensignal wird dagegen verwendet, um kontinuierlich wachsende Phasenverschiebungen zu erzeugen oder um eine von außen auf das Signal 115 wirkende Phasenverschiebung zu kompensieren.

Erfindungsgemäss zeigt Fig. 1B ein schematisches Blockdiagramm des Steuersystems 100, in dem die Steuereinheit 120 einen Zufallszahlengenerator 130 aufweist. Der Zufallszahlengenerator 130 erzeugt Zufallszahlen $r$ im Wertebereich von 0 bis $q$, wobei $q$ jede beliebige reelle Zahl sein kann. Die Anzahl der Stellen der Zahlen $r$ und $q$ ist dabei nur durch die Rechenkapazität der Steuereinheit 120 bzw. durch die Wortbreite der Zahlen $r$ und $q$ begrenzt. Jede Zufallszahl $r$ kann vom Zufallsgenerator mit der Wahrscheinlichkeit $1/q$ (bzw. $q$ für $q < 1$) erzeugt werden.

Das von der Steuereinheit 120 erzeugte Primärsignal hat den Wert $x$ und variiert mit der Zeit. In Abhängigkeit von den zeitlich variablen Größe der statistischen Zufallszahl $r$ und des deterministischen Primärsignals $x$ und der zeitlich konstanten Zahl $q$ wird von der Steuereinheit 120 die statistische Größe $x_r$ gebildet. $x_r$ nimmt für einen Wert von $(x + r)$, der kleiner als $q$ ist, den Wert 0 an und für einen Wert $(x + r)$ der größer oder gleich $q$ ist, den Wert $q$ an. $x_r$ ist die statistische Rundung des Primärsignals $x$.

Das Steuersignal 125 wird aus dem Primärsignal $x$ und dem Wert $x_r$ erzeugt und hat die Größe $(x - x_r)$. Aufgrund der Wahrscheinlichkeitsverteilung der Zufallszahl $r$ und der Rundungsgröße $q$ lässt sich leicht überprüfen, dass das Steuersignal 125 mittelwertfrei ist. Die Größe des Steuersignals 125 ist also in Abhängigkeit von der Größe des Primärsignals $x$ und der Zufallszahl $r$ gleich dem Primärsignal $x$ oder in Bezug auf das Primärsignal $x$ um den Betrag $q$ vermindert. Je größer dabei das (deterministische) Primärsignal $x$ ist, desto wahrscheinlicher ist das Steuersignal 125 um den Wert $q$ reduziert.

Dadurch werden im Primärsignal $x$ enthaltene niedrige Frequenzen stark unterdrückt, da das statistische Umspringen zwischen den Werten $x$ und $(x - q)$ zu einer Erhöhung der Frequenz des Primärsignals $x$ führt.

In einem faseroptischen Kreisel wird die Phasenmodulation verwendet, um die zur Drehratenbestimmung notwendige Messung an bestimmten Arbeitspunkten einer Interferometerkennlinie, die die Interferenz zweier im faseroptischen Kreisel überlagerten Lichtstrahlen angibt, ausführen zu können.

Bezüglich der Auswahl der Abfolge der Arbeitspunkte bestehen gewisse Freiheitsgrade, die sinnvoll ausgenützt werden müssen. Das Ansteuern dieser Arbeitspunkte durch den Phasenmodulator verfolgt dabei die folgenden Ziele:

1. Ohne Modulation würden Scheitelpunkte der kosinusförmigen Inferometerkennlinie angesteuert, die die Steigung Null haben. Somit wäre die Empfindlichkeit des faseroptischen Kreisels gleich Null, und es wäre keine Richtungsinformation vorhanden. Um diese Nachteile zu vermeiden, werden Punkte größter Steigung angesteuert.

2. Würden nur Punkte mit gleichem Vorzeichen angesteuert, so würde eine anliegende Drehrate zu einem Gleichspannungssignal führen, das durch nachfolgendes Verstärken unterdrückt würde. Daher werden Arbeitspunkte mit wechselndem Vorzeichen angesteuert. Dadurch entsteht ein Auslesesignal, das im Durchlassbereich der nachfolgenden Verstärkerstufen liegt.

3. Würden die Arbeitspunkte so angesteuert, dass positive und negative Steigungen periodisch abwechseln, würde eine Korrelation zwischen dem Steuersignal 125 und weiteren zum Betrieb des faseroptischen Kreisels notwendigen Signalen entstehen, was zu Unempfindlichkeitsbereichen bei kleinen Drehraten führen würde. Somit muss die Abfolge der Vorzeichen der Steigungen der Arbeitspunkte (Modulation) so erfolgen, dass diese Korrelation Null wird.

4. Die Modulation muss so beschaffen sein, dass der elektrooptische Verstärkungsfaktor wie oben beschrieben bei beliebigen Eingangsdrehraten des Sensors kompensiert werden kann.

Wählt man nun q=$\pi$ zu, ändert sich die Phase statistisch um den Wert $\pi$, was einen Wechsel zu einem Arbeitspunkt mit entgegengesetzter Steigung führt und somit die Demodulatorreferenz ändert. Für q=2$\pi$ ändert sich die Phase statistisch um den Wert 2$\pi$, wobei das Vorzeichen der Steigung unverändert bleibt.

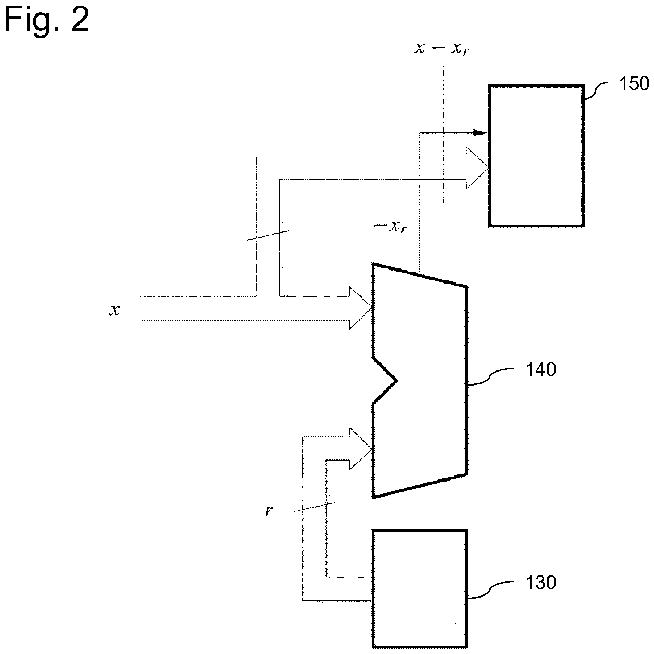

Fig. 2 zeigt eine schaltungstechnische Realisierung der Erzeugung der Mittelwertfreiheit (Erwartungswert E(x-$x_r$)=0) des Steuersignals 125. Das Primärsignal kann zeitabhängig und aus dem Wertebereich $x(t) \in [0, q)$ sein. Es kann z.B. eine Wortbreite von 12 Bit aufweisen, wobei die Gewichtung des "most significant bit" (MSB) q/2 ist. Zu diesem Signal x(t) wird im Addierer 140 die im Zufallszahlengenerator 130 erzeugte gleichverteilte Zufallszahl r hinzuaddiert, deren Wortbreite ebenfalls 12 Bit sein kann. Die Bedingung x+r≥q wird durch das Auftreten eines Übertrags signalisiert. Die Summe selbst muss nicht verwendet werden. Ergänzt man die 12 Bit des Signals x durch diesen Übertrag als neues MSB und interpretiert die so gewonnene 13-Bit-Zahl als Zweierkomplementzahl, so wird das derartig gewonnene Steuersignal 125 mittelwertfrei, da das neue MSB (Übertrag) die Gewichtung -q hat.

Das Primärsignal kann auch eine andere Wortbreite aufweisen. Dann wird das Primärsignal wiederum um den Übertrag als MSB zum Steuersignal 125 ergänzt, das deshalb ein Bit mehr aufweist als das Primärsignal.

Das Steuersignal 125 mit Wert (x-$x_r$) und E(x-$x_r$)=0 kann nun einem DA-Wandler 150 zugeführt werden, der seinerseits den Phasenmodulator 110 ansteuert. Es sind hierbei unterschiedliche Werte von q möglich, z.B.:

1. q=$\pi$ und daraus resultierend ein Aussteuerbereich des Phasenmodulators 110 von 2$\pi$ (im Folgenden als 2$\pi$-Modulation bezeichnet)

2. q=2$\pi$ und daraus resultierend ein Aussteuerbereich des Phasenmodulators 110 von 4$\pi$ (im Folgenden als 4$\pi$-Modulation bezeichnet).

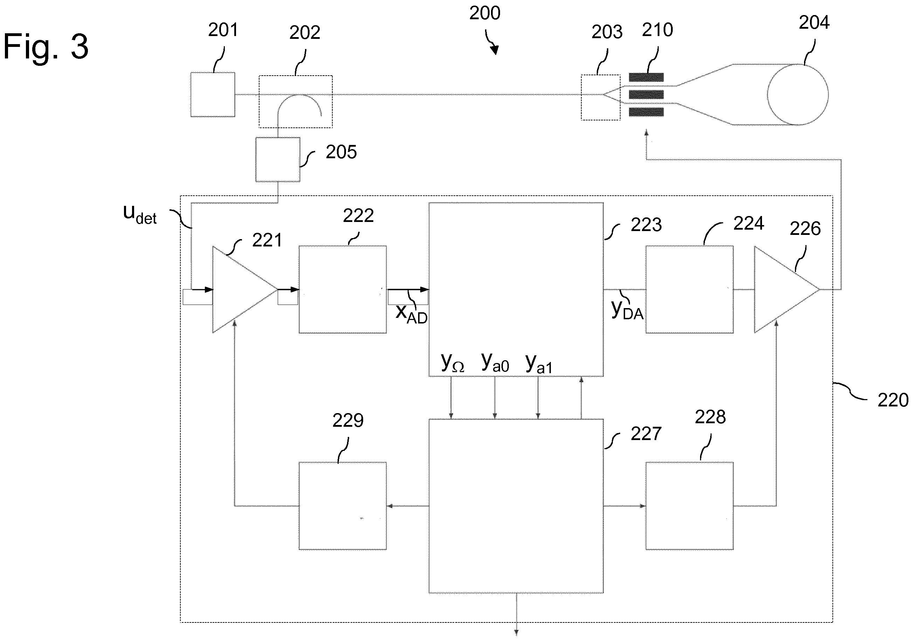

Gemäß einer weiteren Ausführungsform wird das oben beschriebene Steuersystem 100 in einem faseroptischen Kreisel zur Drehratenbestimmung, z.B. in einem Sagnac-Interferometer eingesetzt. Fig. 3 zeigt einen solchen faseroptischen Kreisel 200.

Der Aufbau des faseroptischen Kreisels 200 in Fig. 3 entspricht der üblicherweise verwendeten Anordnung. Eine Lichtquelle 201 sendet Licht der Wellenlänge $\lambda$ und der Frequenz $\omega = 2\pi c/\lambda$ aus, wobei c die Lichtgeschwindigkeit ist.

Die Lichtwellen durchlaufen einen Koppler 202 und werden dann in einem Strahlteiler 203 in zwei Teilstrahlen aufgeteilt. Beide Teilstrahlen durchlaufen einen Phasenmodulator 210, der ihnen eine zusätzliche Phasenmodulation aufprägt. Dadurch entsteht zwischen den beiden Strahlen eine Phasenverschiebung -$\varphi(t)$=-$c_1 \cdot u_\varphi(t)$. Dabei ist $u_\varphi$ eine Steuerspannung des Phasenmodulators 210 und $c_1$ sein elektrooptischer Verstärkungsfaktor. Das negative Vorzeichen für die resultierende Phasendifferenz ist willkürlich gewählt worden.

Daraufhin durchlaufen beide Strahlen in entgegengesetzter Richtung eine mit der Winkelgeschwindigkeit $\Omega$ gegen den Inertialraum rotierende, zu einer Spule 204 mit dem Radius R aufgewickelte Faser mit der Gesamtlänge $L_0$. Aufgrund des Sagnac-Effekts wird eine weitere Phasenverschiebung $\varphi_s$ =$\Omega \cdot S$, mit S = $4\pi RL_0/(\lambda c)$ zwischen den beiden Strahlen wirksam. Die Laufzeit des Lichts durch die Faserspule sei $T_0$. Nachdem beide Strahlen die Spule 204 passiert haben, besteht zwischen ihnen die Phasenverschiebung $\Omega(t) \cdot S - \varphi(t-T_0)$. Beide Strahlen durchlaufen nun wieder den Phasenmodulator 210, diesmal aber mit vertauschter Funktion, sodass als weitere Komponente die Phase $\varphi(t)$ mit positivem Vorzeichen hinzuaddiert wird. Die beiden aus dem Phasenmodulator 210 auslaufenden Strahlen werden im Strahlteiler 203 demnach mit der Gesamtphasenverschiebung $\Omega \cdot S+\varphi(t)-\varphi(t-T_0)$ zur Interferenz gebracht.

Nach der Vereinigung läuft die Lichtwelle als Detektionsstrahl wieder zurück zum Koppler 202, wo ein Teil des Detektionsstrahls zum Detektor 205 geleitet wird. Dort wird eine von der Phasenverschiebung der interferierenden Lichtstrahlen abhängige Ausgangsspannung $u_{det} = c_0 \cos(\Omega \cdot S + \varphi(t)-\varphi(t-T_0))$ erzeugt. Die Konstante $c_0$ hängt von der mittleren Lichtleistung am Empfänger, von dessen Empfindlichkeit und der Verstärkung nachfolgender Stufen ab.

Der verbleibende Schaltungsteil in Fig. 3 dient als Steuereinheit 220 und hat den Zweck, durch Einspeisen geeigneter Signale in den Phasenmodulator 210 das Sagnac-Interferometer 200 in einen Zustand zu bringen, der eine Auswertung des Detektorsignals $u_{det}$ zum Zwecke der Bestimmung der Drehrate $\Omega$ gestattet.

Das vom Detektor 205 erzeugte Signal $u_{det}$ wird einer ersten Verstärkerstufe 221 mit der einstellbaren Verstärkung $a_0$ zugeführt. Dadurch wird das Signal auf einen definierten Pegel $a_0 u_{det}$ gebracht und anschließend durch einen AD-Wandler 222 digitalisiert. Das gewonnene Signal $x_{AD}$ wird einer digitalen Auswerteschaltung 223 zugeführt, die ihrerseits ein Signal $y_{DA}$ erzeugt. Dieses dem Primärsignal entsprechende Ausgangssignal wird durch einen DA-Wandler 224 in eine analoge Spannung übersetzt, und nach Multiplikation mit einem einstellbaren Verstärkungsfaktor $a_1$ an einer zweiten Verstärkungsstufe 226 dem Phasenmodulator 210 zugeführt. Zur Verstärkungseinstellung wird zweckmäßigerweise ein multiplizierender DA-Wandler vorgesehen, wobei dessen Referenzspannung zur Beeinflussung der Verstärkung verwendet wird. Typischerweise wird durch den DA-Wandler 224 und die zweite Verstärkerstufe 226 der elektrooptische Verstärkungsfaktor $c_1$ kompensiert.

Die digitale Auswerteschaltung 223 und die DA- und AD-Wandler 222, 224 arbeiten mit der Taktzeit $T_0$, der Durchlaufzeit des Lichts durch die Spule 204. Es liegt also ein geschlossener Signalpfad vor. Die digitale Auswerteschaltung 223 liefert zu bestimmten, wählbaren Zeitpunkten Ausgabegrößen $y_\Omega$ für die Drehrate, $y_{a0}$ für den Verstärkungsfaktor $a_0$ des Eingangszweigs und $y_{a1}$ für den Verstärkungsfaktor $a_1$ des Ausgabezweigs. Alle diese Größen sind gemittelte Werte, die zur Weiterverarbeitung einem Prozessor 227 zur Verfügung gestellt werden. Zudem wird die digitale Auswerteschaltung 223 vom Prozessor 227 oder einem Zeitgeber nach jedem Auslesen der gemittelten Ausgabewerte mit einem "clear"-Befehl bedient, der zur Rücksetzung der internen Mittelwertbilder dient.

Der Prozessor 227 berechnet aus den vorgemittelten Größen $y_\Omega$, $y_{a0}$ und $y_{a1}$ nach eventueller weiterer Filterung die Messgröße $\Omega$ und die zum Einstellen der Verstärkungsfaktoren $a_0$ und $a_1$ notwendigen Digitalsignale, die über einen ersten Hilfs-DA-Wandler 228 und einen zweiten Hilfs-DA-Wandler 229 die entsprechenden ersten und zweiten Verstärkerstufen 222, 224 beeinflussen.

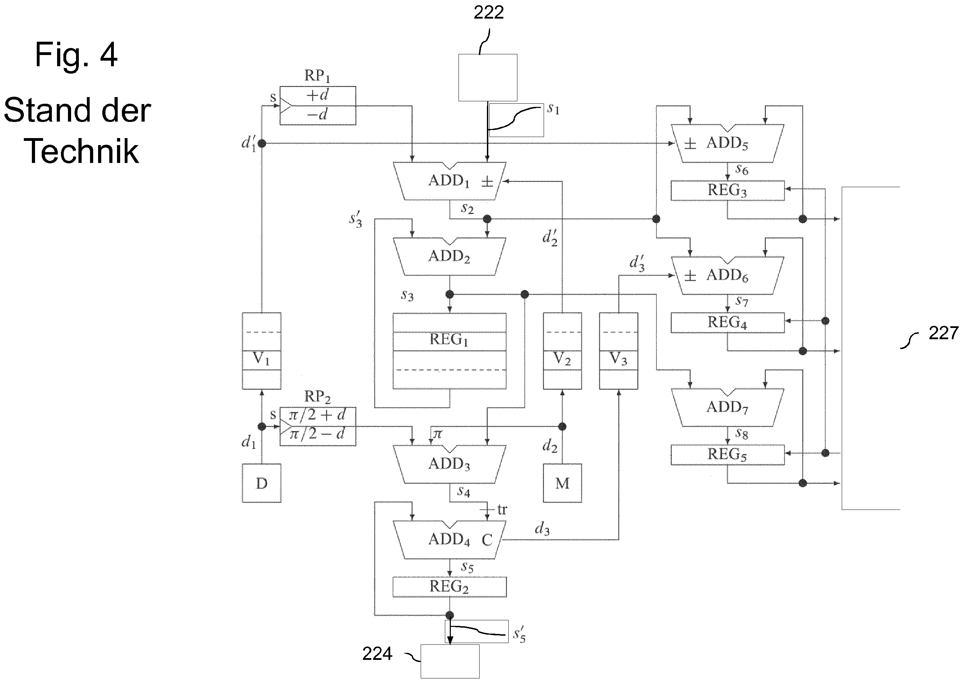

Eine digitale Auswerteschaltung 223 gemäß dem Stand der Technik ist in Fig. 4 skizziert.

Da über $a_1$ und $c_1$ eine Beziehung der digitalen Datenworte $y_{DA}$ auf die optische Phase $\varphi$ hergestellt wird, kann durch geeignete Wahl von $a_1$ derart, dass gilt $a_1c_1=1$, erreicht werden, dass den einzelnen Bits im dem Primärsignal entsprechenden Datenwort $y_{DA}$ Phasenverschiebungen $\varphi$ am Modulator der Größe $\pi \cdot 2^k$ entsprechen. Um die weiteren Ausführungen zu vereinfachen, werden diese Werte $\gamma_k = \pi \cdot 2^k$ direkt den Stellenwertigkeiten der Bits des digitalen Datenworts zugeordnet. Diese Vereinbarung soll außer für $y_{DA}$ für alle digitalen Datenworte der digitalen Auswerteschaltung 223 gelten, d.h., auch für die Datenworte $s_i$, i=1, ...,8, $s_3'$, $s_5'$, $y_{a0}$, $y_{a1}$ und $y_\Omega$ aus Fig. 4. Das bedeutet, dass, abweichend von der Konvention, sich der Zahlenwert eines Datenworts s mit den Bits $\alpha_k$, k=1,...,m gemäß

$$s = \sum_{k=1}^{m} \alpha_k \gamma_k, \qquad \gamma_k = \pi \cdot 2^k$$

berechnet. Dabei ist $\alpha_1$ das "least significant bit" (LSB) und $\alpha_m$ das MSB des Datenworts. Für das Datenwort $y_{DA}$ mit den Bits $\alpha_k', k = l'...m'$ ist dann

$$y_{DA} = \sum_{k=l'}^{m'} \alpha_k' \pi \cdot 2^k$$

Wegen $\varphi = a_1 c_1 y_{DA}$ ist für $a_1 c_1 = 1$ die Phasenverschiebung im Phasenmodulator 210 $\varphi = y_{DA}$. Damit gilt in diesem Fall

$$\varphi = \sum_{k=l'}^{m'} \alpha_k' \pi \cdot 2^k$$

Wie gezeigt wird, ist m' = 0.

Das vom AD-Wandler 222 gelieferte Eingangssignal $x_{AD}$ wird als internes Signal $s_1$ auf einen Eingang des Addierers $ADD_1$ gegeben. Dabei wird, abhängig von einem Demodulationssignal $d_2'$, das die Werte 0 oder 1 annehmen kann, noch eine Bewertung mit $1 - 2d_2'$, also mit + 1 oder -1 durchgeführt. Das Demodulationssignal $d_2'(i)$ ist das um n Takte durch einen Verzögerer V2 verzögerte, von einem Zufallszahlengenerator M gelieferte Modulationssignal $d_2(i)$, d.h. $d_2'(i) = d_2(i-n)$. Die Größe n ist innerhalb vorgegebener Grenzen voreinstellbar, und dient zur Laufzeitanpassung an den externen Signalpfad. Die Signale $d_2$ bzw. $d_2'$ können jeweils zwei Zustände (0 oder 1) annehmen. Für $d_2' = 0$ erfolgt in der Stufe $ADD_1$ eine Addition, für $d_2' = 1$ eine Subtraktion der Größe $s_1$. Der andere Eingang des Addierers ist mit einem Registerpaar $RP_1$ verbunden, in das zwei vorgegebene Werte +d und -d eingespeichert sind. Die Testgröße $\pm d$ wird, wie später gezeigt wird, als zusätzliches Signal in den Hauptregelkreis eingespeist, mit dem Ziel, dessen Schleifenverstärkung zu "messen" und diese mit einem Hilfsregelkreis, der einen steuerbaren Verstärker beeinflusst, auf einen definierten Sollwert zu regeln. Das dem Nutzsignal überlagerte Testsignal $\pm d$ soll hinreichend klein gewählt werden, um Übersteuerungen des externen Kreiselpfads zu vermeiden. Bei korrekt eingestellter Verstärkung kommt es, wie gezeigt wird, zu einer exakten Kompensation dieses Testsignals, so dass die Messgenauigkeit des Sensors unbeeinflusst bleibt. Für die Auswahl des jeweils gewünschten Wertes ist ein "Selekt"-Eingang s vorhanden, der von einem Signal $d_1'$ gesteuert wird. Der ausgewählte, am Addierereingang wirksame Wert ist $(2d_1' - 1) \cdot d$. Damit ist

$$s_2(i) = 2d_1'(i) - 1) \cdot d - (2d_2'(i) - 1) \cdot s_1(i)$$

Das Signal $d_1'$ entsteht, analog zu $d_2'$, durch n-stufige Verzögerung mit Hilfe von $V_1$ aus dem Signal $d_1$. Das Signal $d_1$ wird durch einen von M unabhängigen Zufallszahlengenerator D erzeugt. Die von $ADD_1$ erzeugte Summe $s_2$ wird auf die Eingänge von zwei weiter unten beschriebenen Mittelwertbildern mit $ADD_5$ und $ADD_6$ so-

wie auf den Eingang eines Addierers $ADD_2$ geführt. Dessen Summenausgang $s_3$ wird auf eine Registerkette $REG_1$ gegeben, und als um n Takte verzögertes Signal $d_1$ auf den anderen Addierereingang zurückgeführt:

$$s_3(i) = s_3(i-n) + s_2(i)$$

Daneben speist $s_3$ noch den Mittelwertbilder mit $ADD_7$, der weiter unten erklärt wird, sowie den Addierer $ADD_3$. Auf den anderen Eingang von $ADD_3$ wird mit der Wertigkeit $\pi$ das oben beschriebene, vom Zufallszahlengenerator M gelieferte Signal $d_2$ eingespeist. Auf die Stellen kleinerer Wertigkeit ($\pi/2$, $\pi/4$,...) desselben Eingangs ist der selektierbare Ausgang eines Registerpaars $RP_2$ mit den eingespeicherten Werten $\pi/2+d$ und $\pi/2-d$ geschaltet. Die Selektion erfolgt mit dem oben beschriebenen Signal $d_1$, das vom Zufallszahlengenerator D erzeugt wird. Damit wird

$$s_4(i) = s_3(i) + \pi/2 + d_{2\pi} + (2d_1 - 1) \cdot d$$

Vom Summensignal $s_4$ des Addierers ADD3 werden nun an der Stelle "tr" alle Bits mit der Wertigkeit $2\pi$ und größer abgetrennt. Dieser Vorgang entspricht einer Modulo-$2\pi$-Operation.

Die verbleibenden Bits werden auf den Eingang des aus $ADD_4$ und $REG_2$ bestehenden Phasenintegrators geführt. Der Summenausgang $s_5$ von $ADD_4$ enthält ebenfalls nur alle Bits mit Wertigkeiten kleiner als $2\pi$. Er wird durch $REG_2$ um einen Takt verzögert, und auf den anderen Addierereingang zurückgeführt. Das bei der Addition entstehende Übertragsbit C wird als Signal $d_3$ auf die Verzögererkette $V_3$ gegeben. Dadurch wird

$$s_5(i) = \mathrm{mod}\, 2\pi[s_5(i-1) + \mathrm{mod}\, 2\pi[s_4(i)]]$$

$$d_3(i) = \frac{s_5(i-1) + \mathrm{mod}\, 2\pi[s_4(i)] - s_5(i)}{2\pi}$$

Gleichzeitig wird der Ausgang von $REG_2$ als Primärsignal dienendes Ausgangssignal $y_{DA}$ nach außen auf den DA-Wandler geführt.

Die Signale $s_2$ bzw. $s_3$ werden, wie oben erwähnt, auf drei Mittelwertbilder geführt. Diese sind von außen rücksetzbare Akkumulatoren, die über eine vorgegebene Zeitspanne von m Taktzyklen das zu mittelnde Signal aufsummieren.

Der gemittelte Drehratenwert $y_\Omega$ entsteht durch Akkumulation von $s_3$ mit $ADD_7$ und $REG_5$:

$$y_\Omega = \sum_{i=1}^{m} s_3(i)$$

Die Stellgröße $y_{a0}$ entsteht durch eine mit $ADD_5$ und $REG_5$ durchgeführte Akkumulation von $s_2$, wobei eine zusätzliche, von $d_1'$ abhängige Gewichtung von $s_2$ mit +1 oder -1 vorgenommen wird:

$$y_{a0} = \sum_{i=1}^{m} s_2(i)(2d_1'(i) - 1)$$

Entsprechend entsteht $y_{a1}$ durch von $d_3'$ abhängige, gewichtete Akkumulation von $s_2$ mit $ADD_6$ und $REG_4$. $d_3'$ ist das durch $V_3$ um n Takte verzögerte Signal d3, das aus dem Übertragsbit C mit der Wertigkeit $2\pi$ des Addierers $ADD_4$ des Phasenintegrators gebildet wird:

$$y_{a1} = \sum_{i=1}^{m} s_2(i)(2d_3'(i) - 1)$$

Es sei nun zunächst angenommen, dass die Faktoren $a_0$ und $a_1$ so eingestellt sind, dass $a_0c_0=1$ und $a_1c_1=1$ gilt. Außerdem seien aufgrund der Eigenschaften der Wandler noch n - 1 Totzeiten zu berücksichtigen. Dann ist

$$x_{AD}(i+n) = \cos(\Omega \cdot S + y_{DA}(i+1) - y_{DA}(i))$$

Wie in Fig. 4 gezeigt gilt $y_{DA}(i) = s_5'(i)$ und $y_{DA}(i+1) = s_5(i)$. Außerdem gilt

$$s_4(i) = s_5(i) - s_5'(i) + k \cdot 2\pi$$

Die $k \cdot 2\pi$-fache Abweichung ergibt sich infolge der bei "tr" stattfindenden Modulo-$2\pi$-Operation. Der Term $k \cdot 2\pi$ kann im Argument der Kosinusfunktion aufgrund ihrer Periodizität weggelassen werden. Daher ist

$$s_1(i+1)x_{AD}(i+n) = \cos(\Omega \cdot S + s_4(i))$$

Zunächst sei in den beiden Registerpaaren $RP_1$ und $RP_2$ d=0. Dann gilt:

$$s_4(i) = s_3(i) + \pi/2 + d_{2\pi})$$

und wegen $\cos(x+\pi/2) = -\sin(x)$ sowie $\sin(x) = -\sin(x+\pi)$ und $s_1=x_{AD}$:

$$s_1(i+n) = \sin(\Omega \cdot S + s_3(i)) \cdot (2d_2(i) - 1)$$

Andererseits ist

$$s_2(i+n) = -s_1(i+n) \cdot (2d_2'(i+n) - 1)$$
$$= s_1(i+n) \cdot (2d_2(i) - 1)$$

Daraus folgt nun

$$s_2(i+n) = -\sin(\Omega \cdot S + s_3(i))$$

Die digitale Auswerteschaltung 223 ist ein geschlossener Regelkreis, der versucht, die Regelabweichung ($\Omega$ S+$s_3$(i)) möglichst klein zu machen. Wenn diese im Argument der Sinusfunktion stehende Größe klein ist, kann der Sinus näherungsweise durch sein Argument ersetzt werden, und es gilt:

$$s_2(i+n) = -\Omega \cdot S - s_3(i)$$

oder, in z-transformierten Form:

$$s_2(z) = -z^{-n}(\Omega \cdot S + s_3(z))$$

Die nachfolgende, aus $ADD_2$ und $REG_1$ zusammengesetzte Stufe mit der Übertragungsfunktion

$$\frac{S_3(z)}{S_2(z)} = \frac{1}{1 - z^{-n}}$$

schließt den Regelkreis. Aus den letzten beiden Gleichungen erhält man durch Elimination der Größe $S_2(z)$ die Beziehung

$$S_3(z) = -z^{-n}\Omega \cdot S$$

Das Signal $s_3$ ist also der Drehrate $\Omega$ proportional. Der aus $ADD_7$ und $REG_5$ bestehende Mittelwertbilder erzeugt daraus das Signal $y_\Omega$.

Die vorausgegangene Erklärung geht davon aus, dass die Bedingung $a_1c_1$=1 erfüllt ist. Ein besonderer Hilfsregelkreis soll $a_1$ nachregeln, bis diese Forderung erfüllt ist. Dabei macht man von der Tatsache Gebrauch, dass die digital durchgeführte Modulo-2$\pi$-Operation ein zusätzliches Fehlersignal erzeugt, wenn im Interferometer die Phase nicht um exakt den der Modulo-Operation entsprechenden Wert 2$\pi$ springt. Die am Phasendetektor wirksame Phase ist

$$\varphi_d(i+1) = \Omega \cdot S + a_1c_1(s_5(i) - s_5(i-1))$$

Falls das Produkt $a_1c_1$ vom Idealwert 1 abweicht, kommt zur "idealen" Detektorphase noch ein Phasenfehler

$$\varphi_e(i+1) = (a_1c_1 - 1)(s_5(i) - s_5(i-1))$$

hinzu. Nach der Demodulation erscheint dieser Phasenfehler als zusätzliches Drehratensignal. Dieses Fehlersignal ist also die mit $s_5$(i)-$s_5$(i-1) modulierte Skalenfaktorabweichung. Es gilt aber

$$s_5(i) - s_5(i-1) = \mathrm{mod}\, 2\pi [s_4(i)] - 2\pi d_3(i)$$

Die rechte Seite dieser Gleichung kann als Zweierkomplementzahl mit dem Vorzeichenbit $d_3$ interpretiert werden. Damit ist $d_3$ das Vorzeichen des die Skalenfaktorabweichung ($a_1c_1$-1) modulierenden Signals $s_5$(i)-$s_5$(i-1). Der solchermaßen modulierte Fehler erscheint nach n Takten am Knoten $s_2$ und kann mit dem ebenfalls um n Takte verzögerten Vorzeichen $d_3'(i)$ demoduliert werden, um eine Regelgröße für $a_1$ ableiten zu können. Dies geschieht mit dem aus ADD6 und $REG_4$ aufgebauten Mittelwertbilder. Die zusätzliche Demodulation erfolgt über den $\pm$-Steuereingang des Addierers. Das gemittelte Signal am Ausgang $y_{a1}$ ist demnach ein Maß für die Abweichung des Faktors $a_1$ vom Sollwert (gegeben durch $a_1c_1$=1) und wird dazu verwendet, den Faktor auf den Sollwert einzustellen.

Für die Stabilität des Hauptregelkreises ist es notwendig, dass die Schleifenverstärkung den korrekten, durch $a_0c_0$=1 bestimmten Wert hat. Damit diese Bedingung stets erfüllt ist, ist zur Einstellung von $a_0$ ein Hilfsregelkreis vorgesehen. Für $\Omega$=0$s_2$ ist das um n Takte verzögerte Signal -$s_3$. Für $\Omega$=0 und $a_0c_0 \neq$1 gilt

$$s_2(i+n) = -a_0c_0s_3(i)$$

Damit nun automatisch ein Maß für die Abweichung des Faktors $a_0$ vom Idealwert gefunden werden kann, wird in das Registerpaar $RP_2$ zusätzlich zu dem Wert $\pi$/2 noch eine kleine Testgröße +d und -d eingespeichert. Dadurch wird nun in den Addierer $ADD_3$ zu $s_3$ ein zusätzliches, im Vorzeichen vom Zufallszahlengenerator D gesteuertes Testsignal $2d_1(i)$ -1·$d$ eingespeist. Interessiert man sich nur für die Auswirkung des Testsignals allein, so gilt

$$s_2(i+n) = -a_0c_0 \cdot (2d_1(i) - 1) \cdot d$$

Werden nun in das Registerpaar $RP_1$ dieselben Testgrößen +d und -d eingespeichert, so wird zu $s_2$(i +

*n*) das Testsignal $(2d_1(i + n)-1)\cdot d$ addiert und es gilt

$$s_2(i + n) = (1 - a_0 c_0)(2d_1(i) - 1) \cdot d$$

Es ist also am Knoten eine mit $(1-a_0 c_0)$ bewertete Komponente des Testsignals vorhanden. Diese wird mit dem Mittelwertbilder $ADD_5$ und $REG_3$, dessen Eingangssignal $s_2$ noch zusätzlich mit dem Vorzeichen des Testsignals bewertet wird, herausgefiltert. Dadurch ist das gemittelte Signal $y_{a0}$ ein Maß für die Abweichung des Produkts $a_0 c_0$ von 1 und kann zur Einstellung von $a_0$ auf dessen Sollwert verwendet werden.

Mit der oben beschriebenen in der Steuereinheit 220 integrierten digitalen Auswerteschaltung 223 ist es also möglich, sowohl die Drehrate $\Omega$ als auch die zu deren Ermittlung notwendigen Parameter zu bestimmen. Zudem gibt die Auswerteschaltung 223 als Primärsignal das Signal $y_{AD}$ aus, das direkt in die Phasenmodulation eingeht. Dieses Primärsignal ist weder statisch, noch mittelwertfrei.

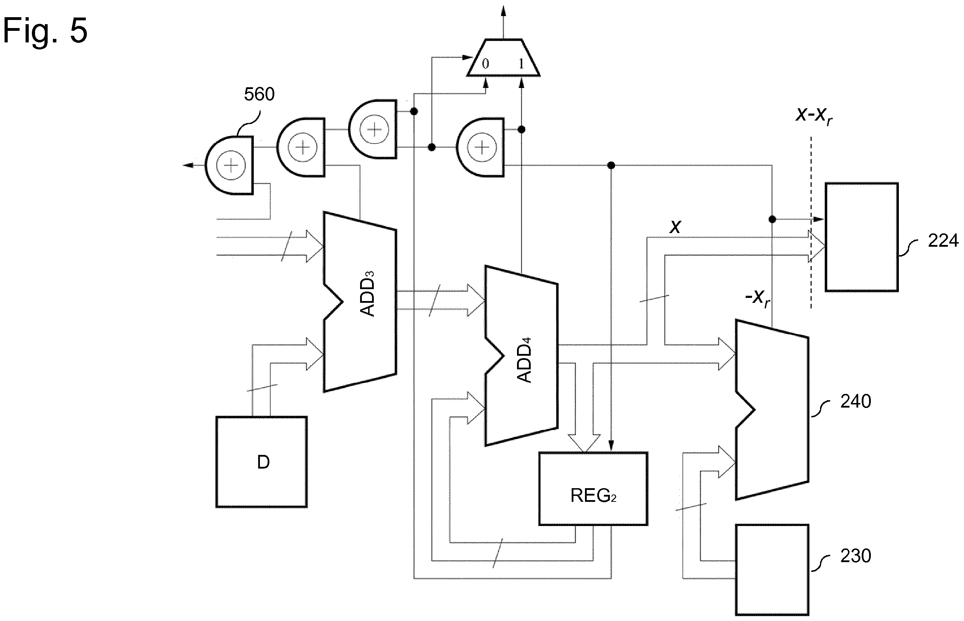

Eine mögliche Abänderung der digitalen Auswerteschaltung 223 gemäß des Beispiels der schaltungstechnischen Realisierung aus Fig. 2 ist in Fig. 5 gezeigt. Fig. 5 zeigt die Elemente D, $ADD_3$, $ADD_4$ und $REG_2$ aus Fig. 4, die zur Ausgabe des Signals $y_{DA}$ benötigt werden.

Anstatt das Signal $y_{DA}$ aber direkt an den DA-Wandler 224 weiterzugeben, wird das Signal $y_{DA}$ mittels eines Zufallszahlengenerators 230 und eines Addierers 240 wie oben in Fig. 2 beschrieben modifiziert. Das Signal $y_{DA}$ entspricht hier also dem Primärsignal x.

Die in Fig. 5 gezeigte Schaltung wird für einen Aussteuerbereich des Phasenmodulators 210 von $2\pi$ verwendet, d.h. für $q = \pi$.

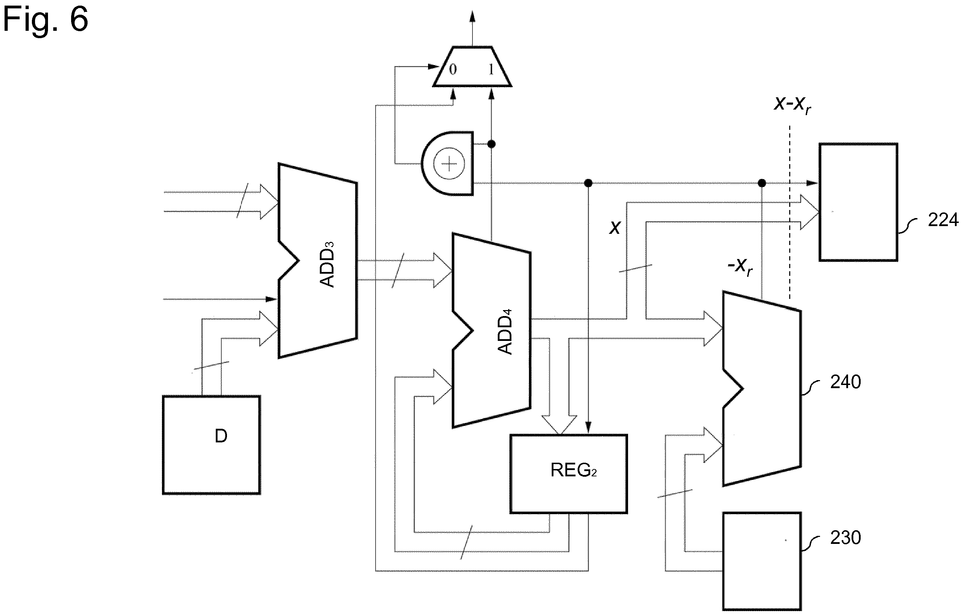

Fig. 6 zeigt eine weitere mögliche Realisierung der Erzeugung eines statistischen, mittelwertfreien Steuersignals basierend auf der aus dem Stand der Technik bekannten digitalen Auswerteschaltung 223. Auch hier wird das Signal $y_{DA}$ (Primärsignal x) durch den Zufallszahlengenerator 230 und den Addierer gemäß dem oben bei Fig. 2 beschriebenen Verfahren zu einem statistischen, mittelwertfreien Steuersignal modifiziert.

Im Unterschied zur Schaltung aus Fig. 5 ist in der Schaltung aus Fig. 6 der Aussteuerbereich des Phasenmodulators $4\pi$, d.h. es gilt $q = 2\pi$. Dadurch gewinnt man im Gegensatz zur Einstellung $q = \pi$ weitere Freiheitsgrade beim Wahl der Arbeitspunkte und der Regelkreisparameter hinzu, so dass sich der Schaltungsaufbau wesentlich vereinfachen lässt. So ist es für $q = 2\pi$ nicht notwendig, das in Zufallszahlengenerator 230 und Addierer 240 erzeugte Signal, wie im Fall $q = \pi$ aus Fig. 5, über ein Gatter aus mehreren XOR Elementen 560 in die digitale Auswerteeinheit 223 zurückzuführen.

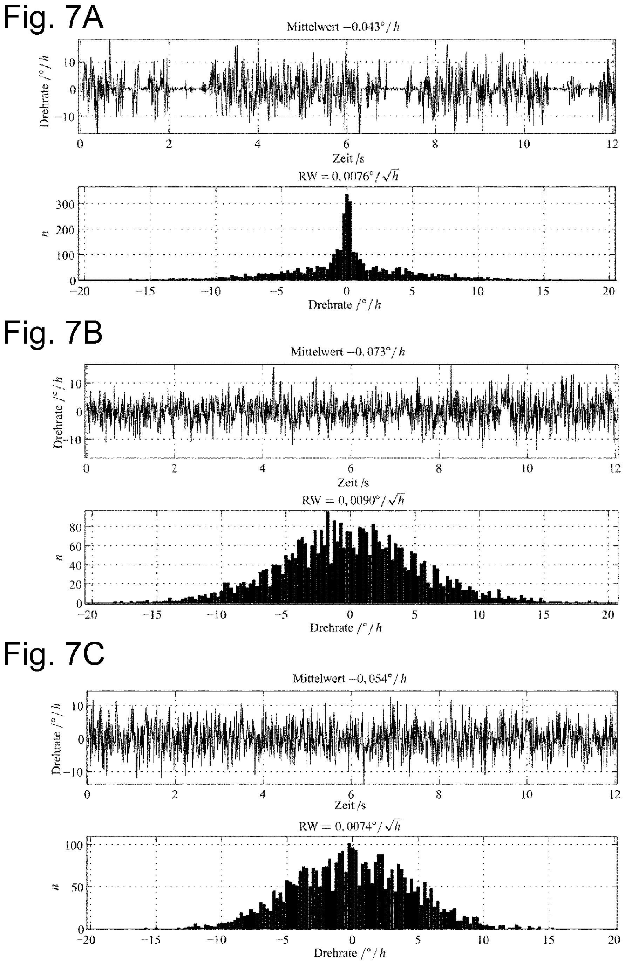

In den Fig. 7A bis 7C ist anhand von Diagrammen schematisch gezeigt, wie sich die Messgenauigkeit eines faseroptischen Kreisels bei Drehraten gleich null bei Benutzung eines Steuersystems verbessert, das ein statistisches, mittelwertfreies Steuersignal zur Phasenmodulation verwendet.

Fig. 7A zeigt im oberen Diagramm die Drehrate in °/h gegen die Zeit für einen faseroptischen Kreisel mit einem Steuersystem gemäß dem Stand der Technik bei einer Drehrate von 0°/h. Hier wäre bei einem fehlerlos funktionierenden System zu erwarten, dass nur statistisch verteiltes Rauschen auftritt, d.h. dass die Werte für die Drehrate gaußverteilt sind. Wie deutlich zu erkennen ist, zeigt die Messkurve Einschnürungen beim Wert 0°/h, d.h. es tritt ein Lock-In-Effekt auf, der die Messung systematisch verzerrt. Die Messergebnisse sind nicht mehr rein gaußverteilt. Dies ist auch im unteren Diagramm der Fig. 7A gut zu erkennen, das die Häufigkeitsverteilung für verschiedene Messwerte darstellt. Es ist klar zu erkennen, dass es sich um kein reines, gaußverteiltes Rauschen handelt, da eine deutliche Überhöhung der Verteilung bei 0°/h auftritt.

Fig. 7B und 7C zeigen die gleichen Diagramme für die Schaltungen aus Fig. 5, bzw. 6, d.h. für ein wie oben beschrieben erzeugtes statistisches, mittelwertfreies Steuersignal mit $q = \pi$, bzw. $q = 2\pi$. Es ist deutlich zu erkennen, dass die Messung nun nur noch vom statistischen Rauschen beeinflusst wird, d.h. die Häufigkeitsverteilung der Messwerte folgt einer Gaußkurve mit Zentrum bei 0°/h und die Messwerte zeigen keine Einschnürungen auf 0°/h mehr. Ähnliche Verbesserungen ergeben sich auch beim Vergleich von Messungen, die bei kleinen Drehraten unter durchgeführt wurden, wie zum Beispiel beim Gyrokompassing, bei dem Anteile der Erddrehrate von 15°/h möglichst exakt vermessen werden müssen.

Es ist somit möglich, mit einem Steuersystem für einen faseroptischen Kreisel, das ein Steuersignal zur Phasenmodulation erzeugt, welches statistisch und mittelwertfrei ist, den Lock-In-Effekt bei 0°/h zu reduzieren und dadurch die Verlässlichkeit der Messergebnisse bei Drehraten nahe 0°/h zu erhöhen.

**Patentansprüche**

1. Steuersystem (100) für einen faseroptischen Kreisel mit:

     einem Phasenmodulator (110) zum Modulieren einer Phase eines Lichtsignals (115);
     einer Steuereinheit (120) zum Erzeugen eines Steuersignals (125), um dessen Größe die Phase moduliert wird und das dem Phasenmodulator (110) zugeführt wird;
     **dadurch gekennzeichnet, dass**
     sich das Steuersignal (125) statistisch ändert und einen Erwartungswert von null hat; und
     die Steuereinheit (120) einen Zufallszahlengenerator (130) aufweist, der Zufallszahlen r zwischen 0 und q mit einer Wahrscheinlichkeit von 1/q erzeugt;

die Steuereinheit (120) ein Primärsignal der Größe x erzeugt;

das Steuersignal (125) die Größe $(x-x_r)$ hat; und gilt, dass $x_r = 0$ für $x+r < q$ und $x_r = q$ für $x+r \geq q$.

2. Steuersystem (100) nach Anspruch 1, wobei die Steuereinheit (120) das Steuersignal (125) mit Erwartungswert null aus einem deterministischen Primärsignal erzeugt.

3. Steuersystem (100) nach Anspruch 1 oder 2, wobei gilt, dass $q = \pi$.

4. Steuersystem (100) nach Anspruch 1 oder 2, wobei gilt, dass $q = 2\pi$.

5. Steuersystem (100) nach einem der Ansprüche 2 bis 4, wobei das Primärsignal eine Überlagerung eines Rechtecksignals und eines Rampensignals ist.

6. Steuersystem (100) nach einem der Ansprüche 2 bis 5, wobei das Steuersignal (125) eine Wortbreite aufweist, die um 1 Bit breiter ist als die Wortbreite des Primärsignals.

7. Steuersystem (100) nach einem der vorherigen Ansprüche, wobei der Phasenmodulator (110) einen Integrierten Optischen Multifunktions-Chip aufweist, der das Steuersignal (125) empfängt.

8. Faseroptischer Kreisel (200) mit einem Steuersystem nach einem der vorherigen Ansprüche und mit:

   einer Lichtquelle (201) zum Emittieren von Licht mit einer bestimmten Wellenlänge;

   einem Strahlteiler (203) zum Teilen des Lichts aus der Lichtquelle (201) in zwei einlaufende Strahlen, die in den Phasenmodulator (210) geleitet werden, und zum Überlagern von zwei aus dem Phasenmodulator (210) austretenden auslaufenden Strahlen zu einem Detektionsstrahl;

   einer Spule (204) zum gegenläufigen Umlaufen der in dem Phasenmodulator (210) empfangenen einlaufenden Strahlen, bevor sie als zwei auslaufende Strahlen dem Phasenmodulator (210) wieder zugeführt werden;

   einem Detektor (205) zum Messen einer Intensität des Detektionsstrahls, die an die Steuereinheit (220) weitergeben wird; wobei die Steuereinheit (220) aus der gemessenen Intensität eine Drehrate um eine Zentralachse der Spule (204) und das statistische Steuersignal mit Erwartungswert null bestimmt.

9. Faseroptischer Kreisel (200) nach Anspruch 8, wobei der Phasenmodulator (210) geeignet ist, die Phasen der zwei einlaufenden Strahlen und die Phasen der zwei auslaufenden Strahlen derart zu modulieren, dass die Intensität des Detektionsstrahls an vorbestimmten Arbeitspunkten messbar ist.

10. Faseroptischer Kreisel (200) nach Anspruch 9, wobei die Arbeitspunkte aufeinanderfolgende Punkte maximaler Steigung der gegen die Phase aufgetragenen Intensität des Detektionsstrahls sind und 4 oder 8 Arbeitspunkten benutzt werden.

11. Faseroptischer Kreisel (200) nach einem der Ansprüche 8 bis 10, wobei der faseroptische Kreisel (200) ein faseroptisches Sagnac-Interferometer ist.

**Claims**

1. A control system (100) for a fiber-optic gyroscope, comprising:

   a phase modulator (110) for modulating a phase of a light signal (115);
   a control unit (120) for generating a control signal (125), by the value of which the phase is modulated and that is fed to the phase modulator (110);
   **characterized in that**
   the control signal (125) varies statistically and has an expected value of zero; and
   the control unit (120) comprises a random number generator (130) that generates random numbers r between 0 and q with a probability of 1/q;
   the control unit (120) generates a primary signal having a value of x;
   the control signal (25) has a value of $(x-x_r)$; and
   it applies: $x_r = 0$ for $x+r < q$ and $x_r = q$ for $x+r \geq q$.

2. The control system (100) according to claim 1, wherein the control unit (120) generates the control signal (125) having expected value of zero out of a deterministic primary signal.

3. The control system (100) according to claim 1 or 2, wherein $q = \pi$.

4. The control system (100) according to claim 1 or 2, wherein $q = 2\pi$.

5. The control system (100) according to any one of claims 2 to 4, wherein the primary signal is a superposition of a square wave signal and a ramping signal.

6. The control system (100) according to any one of claims 2 to 5, wherein the control signal (125) has a word length that is by 1 bit wider than the word length of the primary signal.

**7.** The control system (100) according to any one of the preceding claims, wherein the phase modulator (110) comprises a multifunctional integrated optical chip that receives the control signal (125).

**8.** A fiber-optic gyroscope (200) having a control system according to any one of the preceding claims and comprising:

a light source (201) for emitting light having a predetermined wavelength;
a beam splitter (203) for splitting the light from the light source (201) into two incoming beams that are fed into the phase modulator (210), and for superposing two outgoing beams coming out of the phase modulator (210) to form a detection beam;
a coil (204) for guiding therein in opposite directions the incoming beams received by the phase modulator (210), before they are fed into the phase modulator (210) as two outgoing beams;
a detector (205) for measuring an intensity of the detection beam, which intensity is provided to the control unit (220); wherein
the control unit (220) determines from the measured intensity a rotation rate around a central axis of the coil (204) and the statistical control signal having expected value zero.

**9.** The fiber-optic gyroscope (200) according to claim 8, wherein the phase modulator (210) is configured to modulate the phases of the two incoming beams and the phases of the two outgoing beams such that the intensity of the detection beam can be measured at predetermined working points.

**10.** The fiber-optic gyroscope (200) according to claim 9, wherein the working points are subsequent points having maximal gradient of intensity of the detection beam plotted against the phase, and 4 or 8 working points are used.

**11.** The fiber-optic gyroscope (200) according to any one claims 8 to 10, wherein the fiber-optic gyroscope (200) is a fiber-optic Sagnac interferometer.

## Revendications

**1.** Système de commande (100) pour un gyroscope à fibre optique avec :

un modulateur de phase (110) pour la modulation d'une phase d'un signal lumineux (115) ;
une unité de commande (120) pour la génération d'un signal de commande (125), autour de l'amplitude duquel la phase est modulée et qui est amené au modulateur de phase (110) ;

**caractérisé en ce que**
le signal de commande (125) se modifie de façon statistique et a une valeur attendue nulle ; et
l'unité de commande (120) présente un générateur de nombres aléatoires (130), qui génère des nombres aléatoires r entre 0 et q avec une probabilité de 1/q ;
l'unité de commande (120) génère un signal primaire de l'amplitude x ;
le signal de commande (125) a l'amplitude ($x - x_r$) ; et
$x_r = 0$ pour $x + r < q$ et $x_r = q$ pour $x + r \geq q$.

**2.** Système de commande (100) selon la revendication 1, dans lequel l'unité de commande (120) génère le signal de commande (125) avec une valeur attendue nulle à partir d'un signal primaire déterministe.

**3.** Système de commande (100) selon la revendication 1 ou 2, dans lequel $q = \pi$.

**4.** Système de commande (100) selon la revendication 1 ou 2, dans lequel $q = 2\pi$.

**5.** Système de commande (100) selon l'une des revendications 2 à 4, dans lequel le signal primaire est une superposition d'un signal rectangulaire et d'un signal en rampe.

**6.** Système de commande (100) selon l'une des revendications 2 à 5, dans lequel le signal de commande (125) présente une largeur de mot, qui est plus large de 1 bit que la largeur de mot du signal primaire.

**7.** Système de commande (100) selon l'une des revendications précédentes, dans lequel le modulateur de phase (110) présente une puce multifonctions optique intégrée, qui reçoit le signal de commande (125).

**8.** Gyroscope à fibre optique (200) avec un système de commande selon l'une des revendications précédentes et avec :

une source lumineuse (201) pour l'émission de lumière d'une longueur d'onde déterminée ;
un diviseur de faisceau (203) pour la division de la lumière de la source lumineuse (201) en deux faisceaux entrants, qui sont guidés dans le modulateur de phase (210), et pour la superposition de deux faisceaux partants sortant du modulateur de phase (210) en un faisceau de détection ;
une bobine (204) pour la circulation en sens opposé des faisceaux entrants reçus dans le modulateur de phase (210), avant qu'ils soient à nouveau amenés au modulateur de phase (210) en tant que deux faisceaux partants ;
un détecteur (205) pour la mesure d'une intensité du faisceau de détection, qui est transmise à l'unité de commande (220) ; dans lequel l'unité de commande (220) détermine à partir de l'intensité mesurée une vitesse de rotation autour d'un axe central de la bobine (204) et le signal de commande statistique avec une valeur attendue nulle.

9. Gyroscope à fibre optique (200) selon la revendication 8, dans lequel le modulateur de phase (210) est adapté pour moduler les phases des deux faisceaux entrants et les phases des deux faisceaux partants de sorte que l'intensité du faisceau de détection soit mesurable à des points de travail prédéterminés.

10. Gyroscope à fibre optique (200) selon la revendication 9, dans lequel les points de travail sont des points successifs de pente maximum de l'intensité appliquée contre la phase du faisceau de détection et 4 ou 8 points de travail sont utilisés.

11. Gyroscope à fibre optique (200) selon l'une des revendications 8 à 10, dans lequel le gyroscope à fibre optique (200) est un interféromètre de Sagnac à fibre optique.

## Fig. 1A

## Fig. 1B

# Fig. 2

Fig. 3

EP 3 274 658 B1

Fig. 4
Stand der Technik

# Fig. 5

EP 3 274 658 B1

Fig. 6

## Fig. 7A

## Fig. 7B

## Fig. 7C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19748909
- EP 0441998 A
- US 2004165190 A